# FASCICULE DE BREVET EUROPEEN

(11) **EP 2 132 135 B1**
(45) Date de publication et mention de la délivrance du brevet: **13.08.2014**
(21) Numéro de dépôt: 08775632.6
(22) Date de dépôt: 05.03.2008
(51) Int. Cl.: C01B 3/38, B01J 8/06

(54) **FOUR DE VAPOREFORMAGE UTILISANT DES BRULEURS POREUX**
DAMPFREFORMIERUNGSOFEN UNTER VERWENDUNG VON PORENBRENNERN
STEAM REFORMING FURNACE USING POROUS BURNERS

(30) Priorité: 30.03.2007 FR 0702412
(43) Date de publication de la demande: 16.12.2009
(73) Titulaire: IFP Energies nouvelles, 92852 Rueil-Malmaison Cedex (FR)
(72) Inventeur: GIROUDIERE, Fabrice, F-69530 Orlienas (FR); FISCHER, Béatrice, F-69005 Lyon (FR)
(86) Numéro de dépôt international: PCT/FR2008/000292
(87) Numéro de publication internationale: WO 2008/132312

(56) Documents cités:
- WO-A-2006/119812
- DE-A1- 19 921 420

## Description

### DOMAINE DE L'INVENTION

L'invention concerne le domaine des fours de vaporeformage d'une charge hydrocarbonée en vue de produire du gaz de synthèse. La charge utilisée peut être un hydrocarbure quelconque, de nombre d'atome de carbone variant de 1 à 30, mais est le plus souvent constitué de gaz naturel, ou d'une coupe analogue à une essence légère dite "naphta".

Les fours de vaporeformage sont typiquement constitués d'un ensemble de tubes verticaux de 10 à 15 mètres de longueur, à l'intérieur desquels circule le fluide du procédé, cet ensemble de tubes étant organisé sous forme de plusieurs rangées parallèles.

Les tubes sont chauffés par un ensemble de brûleurs disposés de plusieurs manières possibles.

Dans les fours dit "top fired" (qu'on peut traduire par fours à chauffage par le sommet), les brûleurs sont placés dans la partie supérieure du four, la flamme résultant des brûleurs étant dirigée de haut en bas.

Dans les fours dits en terrasse, les brûleurs sont disposés sur plusieurs rangées horizontales, sensiblement perpendiculaires au plan des tubes, ces rangées, appelées terrasses, étant étagées le long desdits tubes.

Enfin, il existe aussi des fours dans lesquels les brûleurs sont implantés dans la partie inférieure, dite sole, la flamme résultant des brûleurs étant orientée de bas en haut.

Ces différentes configurations ont en commun d'apporter l'énergie nécessaire aux réactions de vaporéformage sous forme d'un ensemble discret de points de chauffe entourant de façon plus ou moins uniforme les tubes à chauffer.

Dans la présente invention, du fait du type de brûleur utilisé, cet ensemble de points de chauffe est remplacé par une zone de chauffe continue, sensiblement parafièle-aux tubes à chauffer, et permet du fait du confinement de la flamme, un rapprochement entre les tubes à chauffer et les brûleurs.

Il en résulte à la fois une plus grande précision dans le flux thermique tout au long des tubes à chauffer, et une plus grande compacité par rapport aux fours de l'art antérieur.

### EXAMEN DES FIGURES

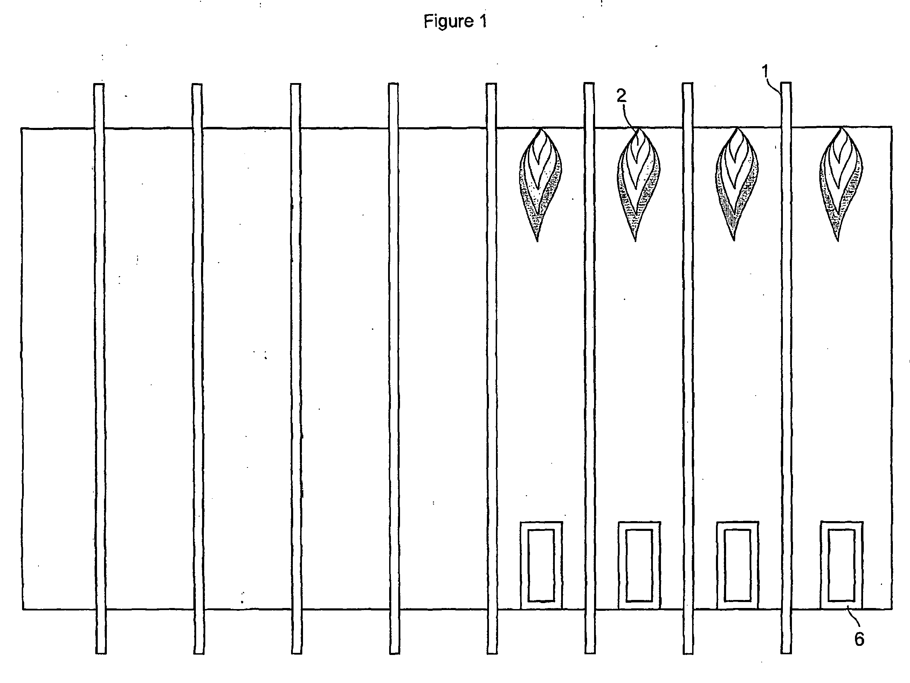

La figure 1 représente en vue de côté un arrangement typique des brûleurs et des tubes à chauffer dans un four de vaporeformage selon l'art antérieur.

On a représenté de façon schématique une flamme placée en partie supérieure du four et se développant verticalement vers le bas.

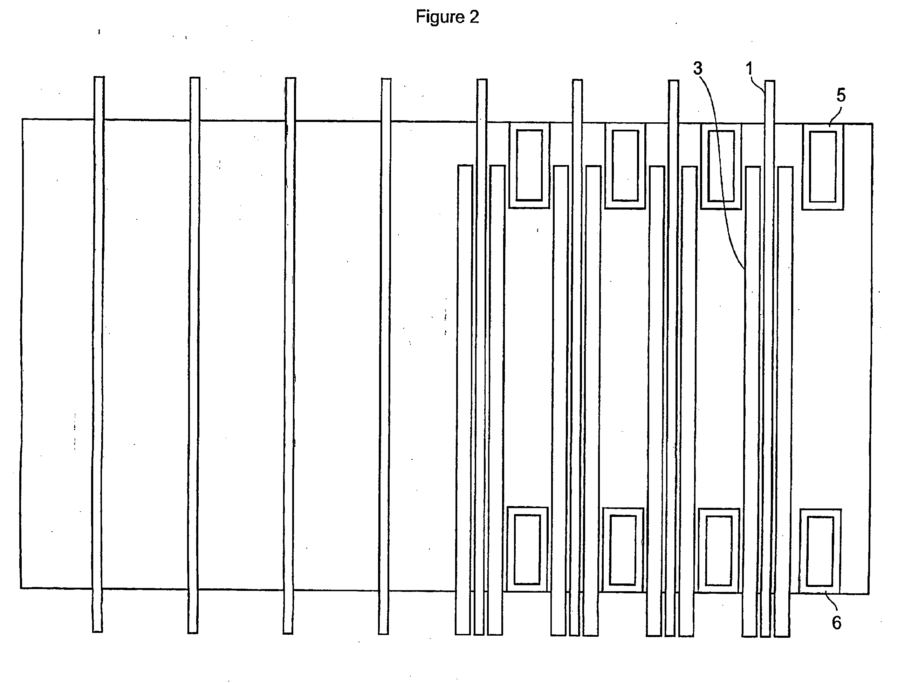

La- figure 2 représente en vue de côté l'arrangement typique des brûleurs et des tubes à chauffer dans un four de vaporeformage selon l'invention.

La figure 3 représente en vue de côté l'arrangement typique des brûleurs et des tubes à chauffer dans un four de vaporeformage selon l'invention, les tubes étant de type baïonnette.

La figure 4 représente un brûleur longiligne poreux utilisé dans la présente invention.

La figure 5 représente un tube baïonnette utilisé comme tube à chauffer et permet de mieux comprendre la circulation des fluides réactionnels.

### EXAMEN DE L'ART ANTERIEUR

Les fours de reformage à la vapeur, appelés aussi fours de vaporéformage, sont principalement utilisés pour la production d'hydrogène. Ils permettent de convertir un mélange d'hydrocarbures et de vapeur d'eau en un mélange d'hydrogène, de gaz carbonique et de monoxyde de carbone.

On trouve une description de tels fours dans de nombreux documents, par exemple dans l'ouvrage "Catalyst Handbook" de Martyn V. Twigg, 2eme édition (1989) qu'on peut traduire par "Manuel de catalyse".

Les fours de vaporeformage comportent des tubes remplis d'un catalyseur à base de nickel (Ni) qui doivent être chauffés suffisamment pour obtenir une température de sortie des réactifs voisine de 900°C.

La pression à l'intérieur des tubes de vaporeformage est généralement comprise entre 10 bars et 30 bars (1 bar = 10⁵ Pascal)

Ces tubes sont chauffés à l'aide de brûleurs, souvent disposés en voûte du four, en sole, ou en terrasse, ce qui donne lieu aux différents types de fours mentionnés précédemment.

La figure 1 représente schématiquement une vue typique d'un four avec brûleurs en voûte selon l'art antérieur. On a représenté l'arrangement des brûleurs notés (2) par rapport aux tubes à chauffer, notés (1). L'espacement entre deux rangées de tubes est voisin de 2 m, et l'espacement entre deux tubes d'une même rangée est habituellement de 200 mm à 400 mm, en fonction du diamètre des tubes.

Le diamètre des tubes est généralement compris entre 70 mm et 150 mm, leur longueur étant généralement comprise entre 7 mètres et 15 mètres, la fraction du tube remplie de catalyseur ayant le plus souvent une longueur d'environ 10 m.

Sur la figure 1, on a représenté également la flamme sortant des brûleurs (2) placés en voûte. Ladite flamme ne doit pas toucher les tubes adjacents (1) pour éviter le fluage de ces tubes, ce qui explique l'espacement important entre les rangées de tubes.

Actuellement, du fait de cette contrainte d'espacement, le nombre de tubes par four de vaporeformage est limité aux environs de 1000, ce qui entraîne une limitation de capacité, pour une unité de production d'hydrogène, à une valeur maximale d'environ 100 000 Nm3/heure d'H2 produit.

L'hydrogène (H2) n'est pas directement produit en sortie du four de vaporeformage.

En effet, l'effluent du four est un mélange de CO, CO2, H2 et H2O qui, dans une première unité dite de conversion du CO, est transformé par la réaction de conversion du CO en CO2 à basse température en vue de maximiser la proportion d'H2 dans le mélange.

Puis, dans une seconde unité, on élimine le CO2 et l'H2O pour aboutir à de l'hydrogène à un niveau de pureté généralement voisin de 95% , qu'on peut améliorer si besoin par une unité de séparation sur membrane du CO2 restant, qui permet de récupérer l'hydrogène à un niveau de pureté supérieur à 98%.

Toute la chaîne de production d'hydrogène en aval du four de vaporeformage ne fait pas partie de la présente invention qui concerne uniquement le four. Néanmoins, on caractérise souvent la puissance du four par sa capacité de production en hydrogène.

On notera enfin dans la structure d'un four de vaporeformage selon l'art antérieur la présence de carneaux permettant d'évacuer les fumées de combustion (6) par la partie inférieure du four, l'air étant généralement introduit en mélange avec le combustible, directement au niveau des brûleurs.

DE 19921420 divulgue un four de vaporeformage avec des brûleurs poreux intégrés dans les tubes de reformage.

### DESCRIPTION SOMMAIRE DE L'INVENTION

La présente invention concerne un four de vaporeformage d'une coupe hydrocarbonée ayant généralement de 1 à 30 atomes de carbone en vue de la production d'hydrogène, ledit four comportant un ensemble de tubes verticaux en partie remplis de catalyseur à base de nickel, tel que defini dans la revendication 1.

Les tubes du four de vaporeformage selon l'invention sont répartis sous forme de rangées parallèles, la chaleur nécessaire à la réaction de vaporeformage étant apportée aux tubes de catalyseur par combustion à l'aide de brûleurs poreux longilignes disposés sous forme de rangées s'intercalant entre les rangées de tubes à chauffer.

La distance entre deux rangée de tubes entre lesquelles est intercalée une rangée de brûleurs est comprise comprise entre 600 mm et 1200 mm, et préférentiellement comprise entre 650 mm et 1000 mm.

La distance entre une rangée de brûleurs et la rangée de tubes la plus proche est donc comprise entre 300mm et 600 mm, préférentiellement entre 300 mm et 500 mm.

La distance centre à centre entre deux tubes consécutifs appartenant à une même rangée est comprise entre 250 mm et 400 mm, et préférentiellement comprise entre 300 mm et 400 mm.

L'air de combustion est le plus souvent apporté par des carneaux situés en haut du four, et les fumées de combustion sont collectées par des carneaux situés en bas du four.

Dans une autre variante, l'air de combustion est apporté par des carneaux situés en bas du four, et les fumées de combustion sont collectées par des carneaux situés en haut du four.

Le combustible utilisé dans le four selon l'invention peut être de nature quelconque. Le plus souvent, il s'agira d'un combustible issu de la purge des unités de la raffinerie, ou de gaz naturel, ou d'un mélange quelconque de divers combustibles disponibles sur le site où est installé le four de vaporeformage.

Les brûleurs utilisés dans le four de vaporeformage selon l'invention sont des brûleurs longilignes poreux, constitués d'un distributeur central longiligne de forme généralement cylindrique, entouré d'un élément annulaire poreux. La distance entre la paroi externe du distributeur et l'élément poreux annulaire est généralement comprise entre 0,5 cm et 10 cm.

L'élément poreux a une porosité généralement inférieure à 50 %, et préférentiellement inférieure à 20 %.

Les tubes à chauffer peuvent être de simples tubes verticaux s'étendant sur toute la hauteur du four ou, dans une variante préférée, être des tubes de type baïonnette, suspendus à la paroi supérieure du four.

Le système de suspension des tubes peut être de tout type connu de l'homme du métier, l'invention n'étant liée à aucun système particulier de suspension.

Pour un four de capacité de production d'hydrogène situé dans la gamme de 50 000 m3/heure à 150 000 m3/heure, la longueur des tubes à chauffer est comprise entre 7 mètres et 15 mètres, et préférentiellement comprise entre 10 mètres et 14 mètres.

L'invention peut également se définir comme un procédé de vaporeformage de gaz naturel ou de naphta mettant en oeuvre le four selon l'invention.

Dans certains cas le combustible utilisé pourra contenir de l'hydrogène, dans une proportion pouvant aller de 5% à 100% molaire. Dans un cas particulier, le combustible utilisé pourra être uniquement constitué d'hydrogène, cet hydrogène pouvant en partie provenir des effluents du four de vaporeformage.

L'air de combustion est généralement amené dans le four en étant préchauffé à une température de l'ordre de 600°C, et préférentiellement supérieure à 700°C.

### DESCRIPTION DETAILLEE DE L'INVENTION

La présente invention concerne une évolution des fours de vaporeformage consécutive à l'utilisation d'un type de brûleur, dit brûleur poreux, qui permet de générer une flamme confinée au voisinage immédiat d'un élément poreux faisant partie intégrante du brûleur. Cette flamme, quelque fois appelé flamme plate, permet à la fois un meilleur contrôle du profil de température le long des tubes à chauffer, et un gain très important de compacité de l'ensemble du four. Les tubes à chauffer sont au moins en partie remplis d'un catalyseur à base de nickel ayant la forme de cylindres d'environ 16 mm de diamètre et de 10 mm de hauteur. A l'intérieur des tubes circulent les fluides réactionnels. La réaction de vaporeformage d'une coupe pétrolière étant fortement endothermique, ces tubes doivent être chauffés pour recevoir la chaleur nécessaire à la réaction.

La présente invention concerne plus précisément l'utilisation d'un brûleur longiligne poreux permettant d'assurer le chauffage d'un ensemble de tubes, et un arrangement entre tubes et brûleurs permettant d'obtenir un four de vaporéformage catalytique beaucoup plus compact que ceux de l'art antérieur.

La figure 2 selon l'invention, permet de visualiser l'arrangement des brûleurs poreux (3), par rapport aux tubes à chauffer (1) qui, dans le cas de la figure 2, sont de simples tubes s'étendant verticalement de haut en bas du four.

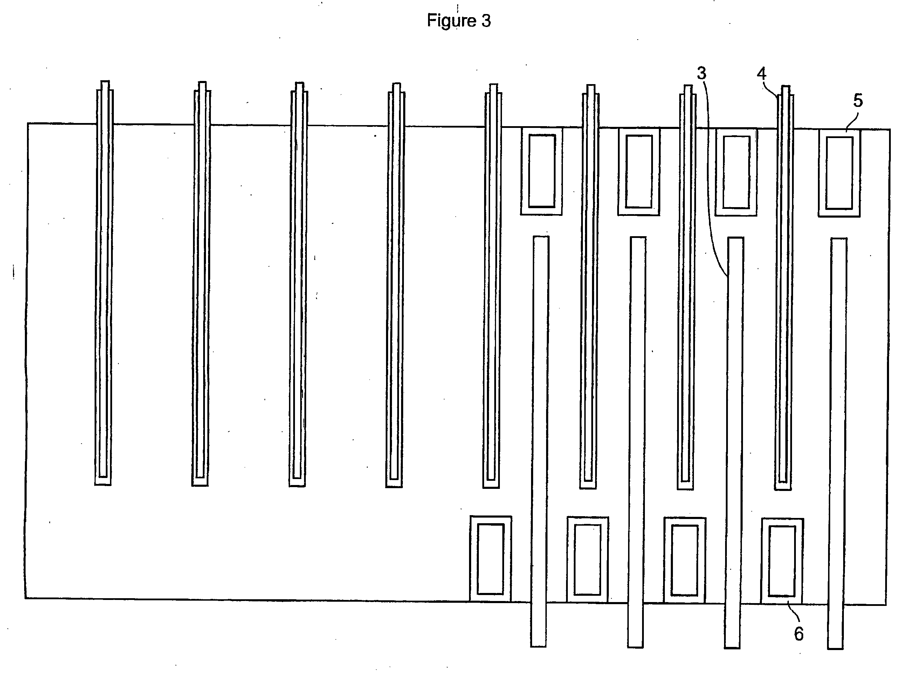

Sur la figure 3, on représente l'arrangement d'un four selon l'invention utilisant des tubes baïonnettes (4) et des brûleurs poreux (3). Dans la configuration représentée sur la figure 3, les tubes ne vont pas jusqu'à la sole du four, mais s'arrêtent au dessus des carneaux d'évacuation des fumées (6), tandis que les brûleurs (3) s'arrêtent en dessous des carneaux d'arrivée d'air (5).

Cet arrangement est beaucoup plus compact que l'arrangement avec des tubes simples, les rangées de tubes pouvant alors être espacées d'un mètre ou moins, (contre 2 mètres ou plus selon l'art antérieur), ce qui double approximativement la capacité d'une unité de production d'hydrogène par vaporeformage par rapport à l'art antérieur.

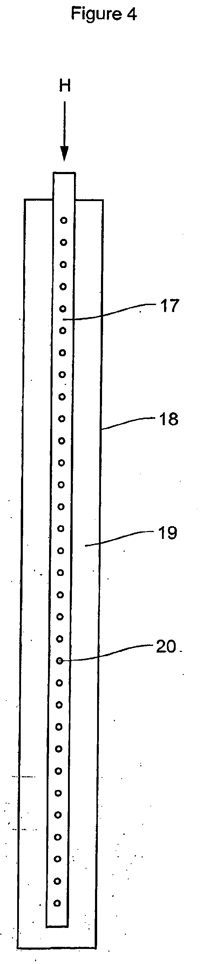

La figure 4 permet de visualiser les éléments principaux d'un brûleur longiligne poreux (3). On trouvera une description complète de ce type de brûleur longiligne poreux dans la demande de brevet FR 2 913 097.

Les brûleurs longilignes poreux (3) sont alimentés en combustible (noté (H) sur la figure 4), au moyen d'un distributeur central (17), lui même sensiblement vertical, et qui est entouré d'un élément poreux (18) de forme annulaire, d'épaisseur comprise entre 0,5 cm et 5 cm. Dans ce brûleur poreux, la distance entre le distributeur et l'élément poreux (zone (19) sur la figure (4)) a une valeur comprise entre 0,5 cm et 10 cm. L'élément poreux (18) a une porosité inférieure à 50 %, et préférentiellement inférieure à 30%, la porosité étant définie comme le volume vide rapporté au volume apparent dudit élément poreux.

Le combustible (H) est distribué sur toute la longueur du distributeur central (17), éventuellement au moyen d'un ensemble d'orifices (20) de diamètre variable selon leur position le long du distributeur, et brûle en contact avec l'air de combustion à la surface où à l'intérieur même de l'élément poreux (18).

Les brûleurs poreux (3) utilisés dans la présente invention ont un distributeur central (17) qui peut posséder un unique tronçon avec un seul diamètre d'orifice, ou être divisé en au moins deux tronçons, chaque tronçon ayant des orifices (20) de même diamètre, et les différents tronçons ayant des orifices d'un diamètre différent.

Par exemple, le distributeur central (17) peut être divisé en au moins deux tronçons, chaque tronçon ayant des orifices (20) de diamètre croissant avec la distance axiale le long du distributeur dans le sens d'écoulement du combustible.

A titre d'exemple nullement limitatif des différents modes de réalisation du distributeur des brûleurs poreux (3), le distributeur central (17) peut être divisé en au moins deux tronçons, chaque tronçon ayant des orifices (20) de diamètre croissant selon une loi de type exponentiel dans le sens de l'écoulement du combustible. Cette disposition permet de réaliser tout au long du brûleur poreux (3) un flux thermique approximativement constant, ce qui ne serait pas le cas avec un unique diamètre d'orifice, en raison de la perte de charge le long du distributeur qui aboutirait nécessairement à un débit de combustible plus faible sur les orifices les plus éloignés de l'extrémité d'introduction du combustible dans ledit distributeur. Cet aspect est d'autant plus important dans le cadre de la présente invention, que les brûleurs poreux (3) peuvent généralement avoir des longueurs de 10 m ou plus, et pouvant aller jusqu'à 15 mètres.

La flamme résultant de la combustion reste confinée au voisinage immédiat de l'élément cylindrique poreux (18), de sorte qu'une distance faible, de l'ordre de 500 mm, et de préférence de l'ordre de 400 mm, suffit entre le brûleur (3) et les tubes de catalyseur (4) pour éviter tout risque de points chauds.

Le comburant, généralement de l'air de combustion, est amené séparément par les carneaux (5), sans aucun pré mélange avec le combustible, et les fumées sont récupérées par les carneaux (6).

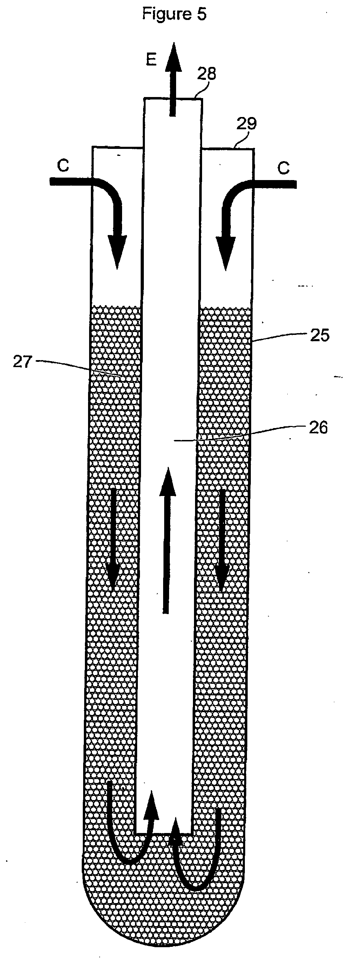

Dans la variante préférée de l'invention selon la figure 3, on utilise au lieu des tubes simples, des tubes dits à baïonnette (4), tels que présentés sur la figure 5.

Ces tubes baïonnettes (4) comportent un tube central (26) plongé au sein d'une enveloppe extérieure (25) et possédant une extrémité (28) qui permet l'évacuation vers l'extérieur du réacteur des effluents de la réaction. L'enveloppe extérieure (25) comporte une extrémité (29) par laquelle est effectuée l'introduction des fluides réactifs dans la zone annulaire (27) entourant le tube central (26).

La zone annulaire (27) est remplie, au moins en partie, d'un catalyseur de vaporeformage, généralement sous forme de petits cylindres ou d'anneaux de diamètre environ 16 mm et de hauteur voisine de 11 mm.

La partie inférieure de la zone annulaire peut être remplie de billes d'un diamètre supérieur à celui des cylindres du catalyseur de manière à limiter la perte de charge correspondant au changement de direction des fluides réactionnels.

Les fluides réactifs traversent la zone annulaire catalytique (27), puis après un retournement d'environ 180°, passent à l'intérieur du tube central (26) et sont évacués vers l'extérieur du four par l'extrémités (28) dudit tube central pour être collectés dans un collecteur ou tout autre système équivalent généralement situé à l'extérieur du four proprement dit.

Du fait de la configuration en baïonnette, une partie de la chaleur de l'effluent circulant dans le tube central (26) est récupérée pour chauffer la charge circulant dans la zone annulaire (27). L'efficacité du transfert de chaleur se trouvant amélioré, la puissance du four pour un débit de charge donné, est de ce fait réduite.

### EXEMPLE (selon l'invention)

On effectue le vaporeformage de gaz naturel dans un four de vaporeformage utilisant des tubes baïonnette tel que celui représenté sur la figure 3.

Le gaz combustible est un mélange de gaz issu de la purge d'une unité PSA (unité d'adsorption /désorption par variation de pression) et de gaz naturel.

Le gaz issu de l'unité PSA a la composition molaire suivante:
H2: 26%
CO2: 49%
CH4: 17%
CO : 8 % (avec traces d'azote et d'eau),

En mélange avec du gaz naturel, on obtient un gaz combustible de composition suivante:
H2: 25%,
CO2: 48%
CH4:18%
CO: 9%

Le four de vaporeformage permet de produire 16000 kilomoles d'hydrogène par heure, soit 32 tonnes/heure, ce qui nécessite de fournir environ 40 MW (abréviation de megawatts, soit 10⁶ watts) de chaleur à transférer vers les tubes.

Avec un excès d'air de 25%, la consommation de combustible est de 950 kilomole/heure de gaz combustible, et nécessite 3115 kilomoles/ heure d'air préchauffé à 700°C.

Les fumées sont produites à raison de 3911 kilomoles/h, soit 400 000 m3/heure aux conditions de température et de pression du four.

Les fumées sortent du four à 975°C. La pression des fumées est de 1,2 bars absolus (1 bar = 10⁵ Pascal).

Une partie de l'énergie des fumées sert à la préchauffe de l'air de combustion.

Chaque carneau d'évacuation des fumées a une largeur intérieure de 350 mm, et une hauteur intérieure de 1000 mm, ce qui correspond à une surface de passage de 0,35 m². Chaque carneau reçoit un débit de fumées de 10 000 m3/heure.

La vitesse de passage des fumées dans le carneau est de 8 m/s.

Le four de vaporeformage selon l'invention comporte 1720 tubes verticaux de type baïonnette dont la partie annulaire est remplie de catalyseur à base de Nickel.

Les particules de catalyseur ont la forme de petits cylindres de diamètre 16 mm et de hauteur 11 mm.

Chaque tube baïonnette est constitué d'une enveloppe externe de 12 m de longueur, de 190 mm de diamètre extérieur, et de 135 mm de diamètre intérieur.

Le tube central situé à l'intérieur de l'enveloppe externe d'un tube baïonnette a un diamètre de 35mm.

Les tubes baïonnette sont répartis sur 40 rangées, chaque rangée comportant 43 tubes. Les rangées de tubes sont espacées de 750 mm, ce qui entraîne une longueur intérieure du four de 30 m.

Sur une rangée donnée, l'espacement des tubes mesurée par leur distance centre à centre est de 350 mm.

Les brûleurs poreux sont au nombre de 1677, répartis en 39 rangées s'intercalant entre les rangées de tubes. Chaque rangée contient 43 brûleurs.

Entre chaque rangée de tubes est intercalée une rangée de brûleurs poreux, de longueur 10 mètres, et séparé d'une distance centre à centre de 350 mm.

Le diamètre extérieur d'un brûleur poreux est de 100 mm.

Le diamètre du distributeur perforé central est de 20 mm.

L'espacement entre le distributeur et le poreux (zone notée (19) sur la figure 4) est de 10 mm.

L'épaisseur de l'élément poreux (18) est de 30 mm.

La porosité de l'élément poreux (18) est de 0,1.

Les dimensions intérieures du four selon l'invention sont donc:
largeur: 15m
longueur: 30m
hauteur: 14 m

A titre de comparaison, un four selon l'art antérieur de la même taille que le four selon le présent exemple, ne permettrait de produire que 12 tonne/h d'hydrogène au lieu de 32 tonnes/h.

Le gain en compacité du four de vaporeformage selon la présente invention est donc remarquable.

## Revendications

1. Four de vaporeformage d'une coupe hydrocarbonée ayant de 1 à 30 atomes de carbone en vue de la production d'hydrogène, comportant un ensemble de tubes verticaux de type baïonnette suspendus à la paroi supérieure dudit four, en partie remplis de catalyseur à base de nickel, les dits tubes à chauffer ayant une longueur comprise entre 7 et 15 mètres, et les dits tubes étant répartis sous forme de rangées parallèles, la distance centre à centre entre deux tubes consécutifs appartenant à une même rangée étant comprise entre 250 et 400 mm, la chaleur nécessaire à la réaction de vaporeformage étant apportée aux tubes de catalyseur par combustion à l'aide de brûleurs poreux longilignes disposés sous forme de rangées s'intercalant entre les rangées de tubes à chauffer, la distance entre deux rangée de tubes entre lesquelles est intercalée une rangée de brûleurs longilignes poreux, étant comprise entre 600 et 1200 mm, et la distance entre une rangée de tubes et la rangée de brûleurs longilignes poreux la plus proche étant comprise entre 300mm et 600 mm.

2. Four de vaporeformage selon la revendication 1, dans lequel le distance entre deux rangées entre lesquelles est intercalée une rangée de brûleurs longilignes poreux est comprise entre 650 mm et 1000 mm.

3. Four de vaporeformage selon l'une quelconque des revendications 1 à 2, dans lequel la distance entre une rangée de tubes et la rangée de brûleurs longilignes poreux la plus proche est comprise entre 300 mm et 500 mm.

4. Four de vaporeformage suivant l'une quelconque des revendications 1 à 3, dans lequel l'air de combustion est apporté par des carneaux situés en haut du four, et les fumées de combustion sont collectées par des carneaux situés en bas du four.

5. Four de vaporeformage suivant l'une quelconque des revendications 1 à 3, dans lequel l'air de combustion est apporté par des carneaux situés en bas du four, et les fumées de combustion sont collectées par des carneaux situés en haut du four.

6. Four de vaporeformage suivant l'une quelconque des revendications 1 à 5, dans lequel les brûleurs longilignes poreux ont une distance entre la paroi externe du distributeur et l'élément poreux comprise entre 0,5 cm et 10 cm.

7. Four de vaporeformage suivant l'une quelconque des revendications 1 à 6, dans lequel les brûleurs longilignes poreux ont un élément poreux de porosité inférieure à 50 %, et préférentiellement inférieure à 20 %.

8. Four de vaporeformage suivant l'une quelconque des revendications 1 à 7, dans lequel la longueur des tubes à chauffer est comprise entre 10 et 14 mètres.

9. Four de vaporeformage suivant l'une quelconque des revendications 1 à 8, dans lequel la distance centre à centre entre deux tubes consécutifs appartenant à une même rangée est comprise entre 300 mm et 400 mm.

10. Four de vaporeformage suivant l'une quelconque des revendications 1 à 9, dans lequel le distributeur central (17) des brûleurs poreux (3) est divisé en au moins deux tronçons, chaque tronçon ayant des orifices (20) de diamètre croissant avec la distance axiale le long dudit distributeur dans le sens d'écoulement du combustible.

11. Procédé de vaporeformage de gaz naturel ou de naphta mettant en oeuvre le four selon l'une quelconque des revendications 1 à 10, dans lequel le combustible utilisé pour alimenter les brûleurs longilignes poreux contient de l'hydrogène dans une proportion comprise entre 5% et 100% molaire.

12. Procédé de vaporeformage de gaz naturel ou de naphta mettant en oeuvre le four suivant l'une quelconque des revendications 1 à 10, dans lequel l'air de combustion est amené dans le four en étant préchauffé à une température supérieure à 600°C, et préférentiellement supérieure à 700°C.

13. Procédé de vaporeformage de gaz naturel ou de naphta mettant en oeuvre le réacteur selon l'une quelconque des revendications 1 à 10.

## Patentansprüche

1. Ofen zur Dampfreformierung eines kohlenwasserstoffhaltigen Schnitts mit 1 bis 30 Kohlenstoffatomen zur Erzeugung von Wasserstoff, umfassend eine Einheit von vertikalen Bajonettrohren, die an der oberen Wand des Ofens aufgehängt, zum Teil mit einem Katalysator auf Nickelbasis gefüllt sind, wobei die zu erhitzenden Rohre eine Länge zwischen 7 und 15 Metern haben, wobei die Rohre in Form von parallelen Reihen verteilt sind, wobei der Mittenabstand zwischen zwei aufeinanderfolgenden Rohren, die einer selben Reihe angehören, zwischen 250 und 400 mm beträgt, wobei die für die Dampfreformierungsreaktion notwendige Wärme zu den Katalysatorrohren durch Verbrennung mit Hilfe von länglichen porösen Brennern zugeführt wird, die in Form von Reihen angeordnet sind, die zwischen den Reihen von zu erhitzenden Rohren ineinander greifen, wobei der Abstand zwischen zwei Rohrreihen, zwischen denen eine Reihe von länglichen porösen Brennern angeordnet ist, zwischen 600 und 1200 mm beträgt, wobei der Abstand zwischen einer Rohrreihe und der nächsten Reihe von länglichen porösen Brennern zwischen 300 mm und 600 mm beträgt.

2. Ofen zur Dampfreformierung nach Anspruch 1, bei dem der Abstand zwischen zwei Reihen, zwischen denen eine Reihe von länglichen porösen Brennern eingesetzt ist, zwischen 650 mm und 1000 mm beträgt.

3. Ofen zur Dampfreformierung nach einem der Ansprüche 1 bis 2, bei dem der Abstand zwischen einer Rohrreihe und der nächsten Reihe von länglichen porösen Brennern zwischen 300 mm und 500 mm beträgt.

4. Ofen zur Dampfreformierung nach einem der Ansprüche 1 bis 3, bei dem die Verbrennungsluft durch Züge zugeführt wird, die sich oben im Ofen befinden, und die Verbrennungsgase durch Züge gesammelt werden, die sich unten im Ofen befinden.

5. Ofen zur Dampfreformierung nach einem der Ansprüche 1 bis 3, bei dem die Verbrennungsluft durch Züge zugeführt wird, die sich unten im Ofen befinden, und die Verbrennungsgase durch Züge gesammelt werden, die sich oben im Ofen befinden.

6. Ofen zur Dampfreformierung nach einem der Ansprüche 1 bis 5, bei dem die länglichen porösen Brenner einen Abstand zwischen der Außenwand des Verteilers und dem porösen Element zwischen 0,5 cm und 10 cm haben.

7. Ofen zur Dampfreformierung nach einem der Ansprüche 1 bis 6, bei dem die länglichen porösen Brenner ein poröses Element mit einer Porosität unter 50 %, vorzugsweise unter 20 %, haben.

8. Ofen zur Dampfreformierung nach einem der Ansprüche 1 bis 7, bei dem die Länge der zu erhitzenden Rohre zwischen 10 und 14 Meter beträgt.

9. Ofen zur Dampfreformierung nach einem der Ansprüche 1 bis 8, bei dem der Mittenabstand zwischen zwei aufeinanderfolgenden Rohren, die einer selben Reihe angehören, zwischen 300 mm und 400 mm beträgt.

10. Ofen zur Dampfreformierung nach einem der Ansprüche 1 bis 9, bei dem der zentrale Verteiler (17) der porösen Brenner (3) in mindestens zwei Abschnitte geteilt ist, wobei jeder Abschnitt Öffnungen (20) mit einem mit dem Axialabstand entlang des Verteilers in Abflussrichtung des Brennstoffes steigenden Durchmesser aufweist.

11. Verfahren zur Dampfreformierung von Erdgas oder Naphta, das den Ofen nach einem der Ansprüche 1 bis 10 einsetzt, bei dem der verwendete Brennstoff zur Versorgung der länglichen porösen Brenner Wasserstoff in einem Verhältnis zwischen 5 und 100 Mol-% enthält.

12. Verfahren zur Dampfreformierung von Erdgas oder Naphta, das den Ofen nach einem der Ansprüche 1 bis 10 einsetzt, bei dem die Verbrennungsluft in den Ofen auf eine Temperatur über 600 °C, vorzugsweise über 700 °C, vorerhitzt eingeleitet wird.

13. Verfahren zur Dampfreformierung von Erdgas oder Naphta, das den Reaktor nach einem der Ansprüche 1 bis 10 einsetzt.

## Claims

1. A furnace for steam reforming a hydrocarbon cut containing 1 to 30 carbon atoms for the production of hydrogen, comprising a set of vertical bayonet type tubes suspended on the upper wall of said furnace, partially filled with nickel-based catalyst, said tubes having a length in the range 7 to 15 meters and being distributed in the form of parallel rows, the center-to-center distance between two consecutive tubes belonging to the same row being in the range 250 mm to 400 mm, the heat necessary for the steam reforming reaction being supplied to the catalyst tubes by combustion using porous longilinear burners disposed in the form of rows which are interposed between the rows of tubes to be heated, the distance between two rows of tubes between which a row of burners is interposed being in the range 600 mm to 1200 mm, and the distance between a row of tubes and the closest row of porous longilinear burners is in the range 300 mm to 600 mm, preferably in the range 300 mm to 600 mm.

2. A steam reforming furnace according to claim 1, in which the distance between two rows of tubes between which a row of burners is interposed is in the range 650 mm to 1000 mm.

3. A steam reforming furnace according to any one of claims 1 to 2, in which the distance between a row of tubes and the closest row of porous longilinear burners is in the range 300 mm to 500 mm.

4. A steam reforming furnace according to any one of claims 1 to 3, in which the combustion air is supplied via flues located at the top of the furnace, and the combustion fumes are collected by flues located at the bottom of the furnace.

5. A steam reforming furnace according to any one of claims 1 to 4, in which the combustion air is supplied via flues located at the bottom of the furnace, and the combustion fumes are collected by flues located at the top of the furnace.

6. A steam reforming furnace according to any one of claims 1 to 5, in which the distance between the outer wall of the distributor and the porous element of the porous longilinear burner is in the range 0.5 cm to 10 cm.

7. A steam reforming furnace according to any one of claims 1 to 6, in which the porous longilinear burners have a porous element with a porosity of less than 50%, and preferably less than 20%.

8. A steam reforming furnace according to any one of claims 1 to 7, in which the length of the tubes to be heated is in the range 10 to 14 meters.

9. A steam reforming furnace according to any one of claims 1 to 8, in which the centre-to-centre distance between two consecutive tubes belonging to the same row is in the range 300 mm to 400 .

10. A steam reforming furnace according to any one of claims 1 to 9, in which the central distributor (17) of the porous burners (3) is divided into at least two sectors, each sector having orifices (20) which increase in diameter with axial distance along said distributor in the direction of flow of fuel.

11. A process for steam reforming natural gas or naphtha employing a furnace according to any one of claims 1. to 10, in which the fuel used to supply the porous longilinear burners contains hydrogen in a proportion in the range 5% to 100% molar.

12. A process for steam reforming natural gas or naphtha according to any one of claims 1 to 10, in which the combustion air is supplied to the furnace having been preheated to a temperature of more than 600°C, preferably more than 700°C.

13. A process for steam reforming natural gas or naphtha using the steam reforming furnace according to any one of claims 1 to 10.
